# EUROPEAN PATENT SPECIFICATION

(11) **EP 1 542 552 B1**
(45) Date of publication and mention of the grant of the patent: **28.01.2009**
(21) Application number: 03809505.5
(22) Date of filing: 14.08.2003
(51) Int. Cl.: A23L 3/01, A23B 5/01, A23B 5/005, A23L 1/32

(54) **MICROWAVE EGG PASTEURIZATION APPARATUS**
GERÄT FÜR DIE PASTEURISIERUNG VON EI MITTELS MIKROWELLEN
APPAREIL DE PASTEURISATION D'OEUFS AU MICRO-ONDES

(30) Priority: 14.08.2002 US 403397 P; 14.08.2002 US 403399 P; 14.08.2002 US 403400 P
(43) Date of publication of application: 22.06.2005
(60) Divisional application: 08005049.5
(73) Proprietor: Pastura Foods, LLC., Westport, CT 06880 (US)
(72) Inventor: MCNULTY, Bernard, A., Weston, CT 06880 (US)
(74) Representative: Bentz, Jean-Paul
(86) International application number: PCT/US2003/025526
(87) International publication number: WO 2004/037012

(56) References cited:
- EP-A- 0 347 623
- EP-A- 0 498 972
- WO-A-95/26636
- WO-A-03/024249
- ES-A6- 2 005 502
- US-A- 4 237 145
- US-A- 4 511 589
- US-A- 4 631 380
- US-A- 4 896 005
- US-A- 5 293 021
- US-A- 6 024 999
- US-B1- 6 231 909

## Description

### BACKGROUND OF THE INVENTION

### (1) Field of the Invention

The invention relates to egg pasteurization. More particularly, the invention relates to the in-shell pasteurization of eggs.

### (2) Description of the Related Art

Microorganism (e.g., bacterial) contamination of eggs has long been a problem in the industry. The particular historic concern is contamination with Salmonella bacteria, most notably the *enteritidis* (SE) strain. Substantial efforts have been made in the egg industry to find ways to pasteurize eggs. A commercially desirable pasteurization process must reduce pathogenic microorganism concentrations to within an acceptable threshold while not substantially altering the other properties of the eggs. Various thermal pasteurization processes have been proposed. In the development of these processes, there has been a careful balancing of microorganism reduction on the one hand with maintaining egg properties on the other (e.g., nutritional and organoleptic properties). In particular, it is important to avoid substantial coagulation of the egg yolks and whites (albumen).

Various thermal systems have been commercially implemented or proposed. Typical systems may feature heated aqueous baths. Such systems may be seen in U.S. Patents 6,455,094, 6,004,603, and 5,843,505. U.S. Patent 6,406,727, identifies the use of high frequency radio waves in the pasteurization of liquid and shell eggs.
International publication WO 95/26636 discloses a method for cooking shell eggs and liquid egg products using radiowaves. WO 95/26636 does not relate to the pasteurization of in-shell eggs.
US 4 237 145 discloses a method and a device for preparing foodstuffs containing coagulating proteins. This document concerns for instance de-shelled liquid eggs. The albumen and the yolk of the eggs are treated separately with microwave energy. The aim is to coagulate the proteins.
EP 0 347 623 A1, US 4 631 380 and US 4 896 005 disclose a method and a device for pasteurizing or sterilizing foodstuffs utilizing microwaves. These documents do not concern the pasteurization of eggs, and more specifically of in-shell eggs. Now, the pasteurization of eggs raises the particular problem of the coagulation of proteins contained therein.
International publication WO 03/024249 has a priority date before the priority date of the present application but was published after the priority date of the present application. It discloses an in-shell pasteurization system for pasteurizing and handling eggs. The system includes a microwave system configured to impart microwave energy to the yolk of the in-shell egg to heat the yolk to a first predetermined temperature and to impart microwave energy to the albumen of the in-shell egg to heat the albumen to a second predetermined temperature. WO 03/024249 discloses neither an essentially right circular cylindrical microwave cavity, nor the preferential excitation of a TM-like mode of the eggs.

### SUMMARY OF THE INVENTION

One aspect of the invention involves an apparatus having a conveyor system conveying eggs along an egg flowpath. Means are provided along the flowpath for preferentially exciting a TE-like mode of the eggs and separately preferentially exciting a TM-like mode of the eggs. The means may involve first and second means preferentially exciting TM₁₀₁-like and TE₁₀₁-like modes. The first means may include a main waveguide in which a TM mode is principally preferentially excited and inlet and outlet waveguides. The conveyor may be configured to spin the eggs during the preferential excitation. The first means may be a pillbox cavity and the second means may be a shielded pair cavity.

Another aspect of the invention involves a conveyor system conveying eggs along an egg flowpath. An essentially right circular cylindrical microwave cavity along the flow path is oscillated a power and frequency for microwave heating of the yolks of the eggs to temperatures above temperatures of albumen of the eggs. The cavity may be positioned longitudinally along the flowpath and may have a length which is less than a diameter. The cavity may have first and second endwalls with respective first and second central apertures. Inlet and outlet waveguides below cutoff for the frequency may be positioned along the flowpath to pass the eggs respectively into and out of the cavity through the first and second apertures. The apparatus may include a second microwave cavity along the flowpath oscillated at a power and frequency for microwave heating of one or both of the yolks and the albumen. The apparatus may further include a cryogenic positioned chiller along the flowpath and operated to preferentially cool the albumen of the eggs. The apparatus may include a thermal conduction heater positioned along the flowpath.

The invention is defined by the claims.

### BRIEF DESCRIPTION OF THE DRAWINGS

Fig. 1 is a schematic view of an egg pasteurization system.

Fig. 2 is a longitudinal sectional view of a yolk heating cavity assembly of a yolk heating subsystem of the system of Fig. 1.

Fig. 3 is a semi-schematic view of a yolk heating subsystem of the system of Fig 1.

Fig. 4 is a longitudinal sectional view of an albumen heating cavity of the system of Fig. 1

Fig. 5 is an end view of the cavity of Fig. 4.

Fig. 6 is a longitudinal sectional view of an alternate albumen heating cavity.

Fig. 7 is a longitudinal sectional view of a second alternate albumen heating cavity.

Fig. 8 is a longitudinal sectional view of an alternate compound cavity.

Fig. 9 is a sectional view of the compound cavity of Fig. 8 taken along line 9-9.

Like reference numbers and designations in the various drawings indicate like elements.

### DETAILED DESCRIPTION

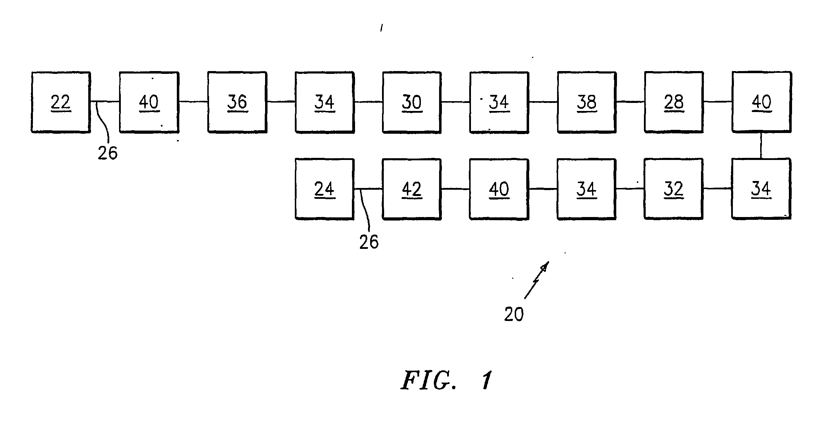

Fig. 1 shows a pasteurization system 20 wherein individual uncontainered shell eggs (e.g., chicken eggs) flow in a downstream direction 500 along a flowpath 502 from a source 22 to a destination 24 supported by a conveyor subsystem 26. An exemplary source may be a bulk transfer station and an exemplary destination may be a packer. The conveyor subsystem may be continuous or interrupted and may include one or more buffering locations 28 to compensate for different speeds of different portions of the conveyor system. Additionally, the conveyor system and flowpath may branch and/or converge at various points in accordance with desired plant/system layout. In an exemplary embodiment, the eggs move along the flowpath with their long axes oriented transverse to the flowpath and downstream direction. Between the inlet and discharge ends of the system, several stations or processing subsystems may be located along the conveyor 26. In exemplary embodiments, these include two separate stations 30 and 32 for principal thermal treatment of the eggs. Exemplary temperature sensor subsystems 34 may be positioned upstream of the first station 30, between the stations, and downstream of the second station 32 and in other locations as appropriate. One or more of a thermal preprocessing station 36 upstream of the station 30, immediate processing station 38 between the stations 30 and 32, and a post-processing station 40, 42 downstream of the second stations 32 may also be provided. Such stations may condition the eggs to permit the principal stations 30 and 32 to operate at peak efficiencies or other desired conditions and may have a relatively smaller individual impact on the bacteria count.

In a first family of embodiments, one of the stations (e.g., the first) preferentially heats the yolk while the other station preferentially heats the albumen. In a second family of embodiments, one station (e.g., the first) also preferentially heats the yolk while the second station more evenly heats both the yolk and albumen. In a third family of embodiments, one station (e.g., the first) preferentially cools the albumen while the other preferentially heats the yolk. In a fourth family of embodiments, both stations preferentially heat the yolk with sufficient buffering between the stations to permit: (a) diffusive heating from hot spots in the yolk to cooler portions of the yolk to normalize yolk temperature; and (b) diffusive heating of the albumen from the yolk heated in the first stage. In such buffering situations it may be particularly advantageous to have temperature sensor subsystems both at the outlet from the first station and at the inlet to the second station.

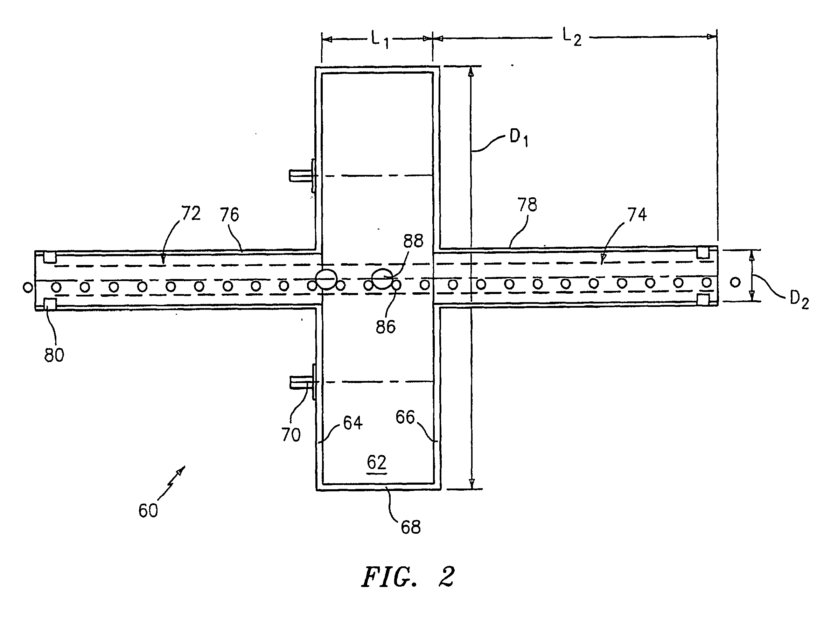

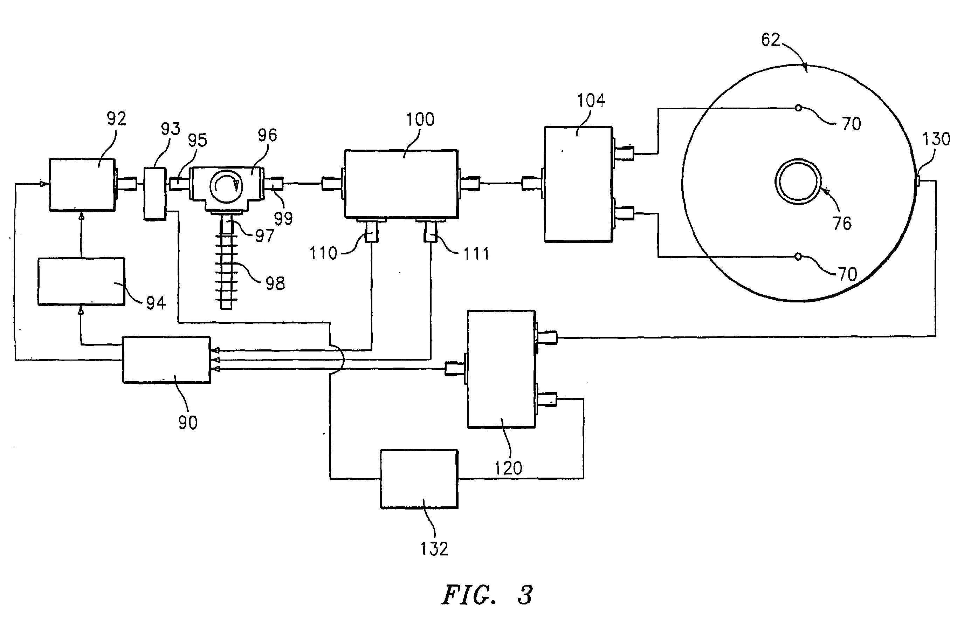

Figs. 2 and 3 show further details of a yolk heating station. The station includes a cavity assembly 60 including a main microwave cavity 62 formed as a right circular cylinder of length L₁ along the flowpath and diameter D₁ transversed thereto. An exemplary main cavity is a pillbox cavity with L₁<D₁ and, preferably <0.5 D₁. The exemplary main cavity is bounded by upstream and downstream walls 64 and 66 and a peripheral wall 68. The cavity may include two or more feed probes 70 (e.g., two or four equally spaced probes mounted in one or more of the upstream or downstream walls).

The upstream and downstream walls are centrally apertured and, have extending therefrom, respective upstream (inlet) and downstream (outlet) waveguide conduits 72 and 74 having respective circular cylindrical tubular walls 76 and 78. Proximate the upstream (inlet) end of the inlet conduit 72 and the downstream (outlet) end of the outlet conduit 74 temperature sensors 80 may be positioned as portions of the temperature sensor subsystems. The temperature sensors may take the form of shielded loops that are electrically driven with the signal perturbation providing an indication of overall egg temperature as the egg passes through the loop. These could be combined with a small pillbox cavity (not shown) driven at a frequency so as to not substantially affect the temperature of the eggs lost sufficient so that the response of the cavity may provide indications of yolk mass and yolk temperature. Each of the inlet and outlet conduits has a length L₂ and a diameter D₂ (although the two conduits may have different such dimensions). Exemplary L₂>>D₂ with D₂ being well below cutoff for the excitation of the main cavity 62 so as to permit only the escape of evanescent waves. Such escaping waves are essentially unable to carry power and, thereby, limit the emission of electromagnetic energy from the outboard ends of the inlet and outlet conduits. Notwithstanding the foregoing, the presence of the conveyor and liner tube/conduit may, however, provide a moderate path for leakage. The interior surfaces, of the inlet and outlet conduits may, at least near the outboard ends thereof, be coated with a photonic absorber (not shown) in order to dissipate the power-carrying high frequency harmonics of the fundamental microwave energy that might be excited and otherwise leak from the system. Similarly, small couplers (also not shown) may be fitted to the inlet and outlet conduits to siphon off any harmonic energy that might be generated. The portion of the conveyor section within the main cavity and inlet and outlet conduits may be mounted within a low-loss dielectric sleeve/tube (not shown) which protects the cavity and inlet and outlet conduits from ruptured eggs or other debris and which may be removed to facilitate cleaning. A section 84 of the conveyor subsystem 26 passes longitudinally through the inlet conduit, main cavity, and outlet conduit. The exemplary conveyor section 84 includes a moving array of transversely-extending horizontal, spool-shaped, dielectric rollers 86 for supporting the eggs 88 with their long axes transverse to the flowpath and rolling the eggs about those axes during the downstream movement. Such rotation compensates for internal irregularies in the yolk and albumen to provide more uniform exposure to the field excitation. During traversal through the main cavity 62, the conveyor section advantageously maintains the eggs sufficiently spaced apart so that there is no more than insubstantial coupling between eggs which would interfere with the eggs' interaction with the fields of main cavity. The rotation of the eggs provides for evenness of heating. The portion conveyor section within the main cavity and inlet and outlet conduits may be mounted within a low-loss dielectric sleeve/tube. The conveyor section may advantageously be speed controlled independently of the speed of other sections (e.g., if appropriate buffering stations are included along the flowpath). The speed control may be provided by a variable speed servomotor (not shown) coupled to a system or subsystem controller (e.g., general purpose, computer, microcontroller, or the like).

Fig. 3 shows further details of the equipment for driving oscillation within the main cavity. A local controller 90 is coupled to a voltage controlled oscillator 92 and its solid state amplifier power supply 94. A tunable magnatron may alternatively be used. The oscillator's output is directed via a 0° hybrid splitter 93 to the input port 95 of a protective three port circulator 96 whose transverse output port 97 is connected to an absorber load 98 and whose inline output port 99 is connected to a directional coupler 100. Connecting cables (e.g. coaxial cables) are shown but not separately referenced. A principal output port of the coupler 100 is coupled to the input port of a two way splitter 104 whose output ports are coupled to the feed probes 70. Outputs 110 and 111 from the directional coupler 100 provide forward and reflected power signals back to the controller. In the illustrated embodiment, the controller also receives the output of a mixer 120 which receives a pair of inputs from a signal probe 130 in the main cavity peripheral wall on the one hand and a variable phase shifter 132 on the other hand. The shifter receives input from the second output port of the splitter 93 and may initially be set at 0°. The passage of the eggs (essentially being lossy dielectrics) will change the unloaded resonant frequency of the cavity on a periodic basis and thus the operating mode and fields within the cavity. Accordingly, the system may be in a constant state of change. Relative stability may be maintained by operating it in a phase-locked-loop. The oscillator signal and sample signal from the signal probe 130 are fed into the mixer 120 to obtain an error signal delivered to the local controller 90. The processed error signal is used to control the frequency of the oscillator 92. The local controller 92 may also use the samples of forward and reflected power and the amplitude of the signal outputted by the probe as well as sensed inlet and outlet temperatures to maintain the appropriate power level and frequency within the cavity to appropriately heat the yolk,

In operation, the main cavity 62 is driven to oscillate principally a single mode, namely a transverse magnetic (TM) mode (e.g., the TM₁₀₁ dielectric mode) to, in turn, oscillate that mode of the egg. Technically, the pure TM₁₀₁ mode applies to a sphere, whereas the ovoid shape of the egg (in combination with the yolk having different dielectric properties than the albumen) causes departures from the ideal so as to have a TM₁₀₁-like oscillation. An ideal TE mode would similarly translate into a TE-like dielectric mode. It is believed that such transverse magnetic oscillation of the egg at a controlled frequency and intensity principally heats the yolk with only slight heating of the albumen. An exemplary frequency range for oscillating the cavity is 1100-1200 MHz. Particular resonant frequencies within or beyond this range may be dependent on overall egg size and yolk size. Testing has been conducted outside this preferred range, namely in the 890-940 MHz range particularly. Control of frequency is achieved via the feedback loop while control of the power level advantageously made responsive in real time to sensed parameters including the egg size, the temperatures of yolk and albumen upon entering the subsystem, and such temperatures upon exiting (clearly sensed parameters in such a case likely being used to control the oscillator associated with subsequent eggs).

By configuring the cavity essentially symmetric about a flowpath axis and exciting the cavity at a low enough frequency such that only one mode is being excited in the cavity (i.e., the dominant mode), it is believed that a particularly even electromagnetic field may be applied to the eggs. This is distinguished, for example, from parallelopiped cavities (e.g., as in microwave ovens) that may have overmoded electromagnetic field patterns which vary in power by orders of magnitude over differences of a few centimeters and are significantly =displaced by the introduction of a load. In industry, such parallelopiped cavities are typically associated with batch processing (e.g., of cartoned or trayed items). As applied to egg pasteurization, such parallelopiped cavities and/or their associated batch processing could create substantial non-uniform heating and partial (potentially random) coagulation of portions of the egg (especially the albumen which is susceptible to coagulation at lower temperatures than the yolk). With the exemplary embodiment, the eggs may pass slowly and smoothly through the cavity or their passage may be incremental (e.g., with each egg stopped in an operative position centrally within the cavity for a processing interval). In alternative embodiments, multiple eggs may remain in multiple operative positions (either throughout processing in the cavity or shifting from one operative position to the next). In yet further variations, the eggs may pass with their axes in different orientations (e.g. aligned with the flowpath to provide more even/symmetric heaving). However, such orientations may require more complicated conveyors if it is desired that such conveyors also rotate the eggs.

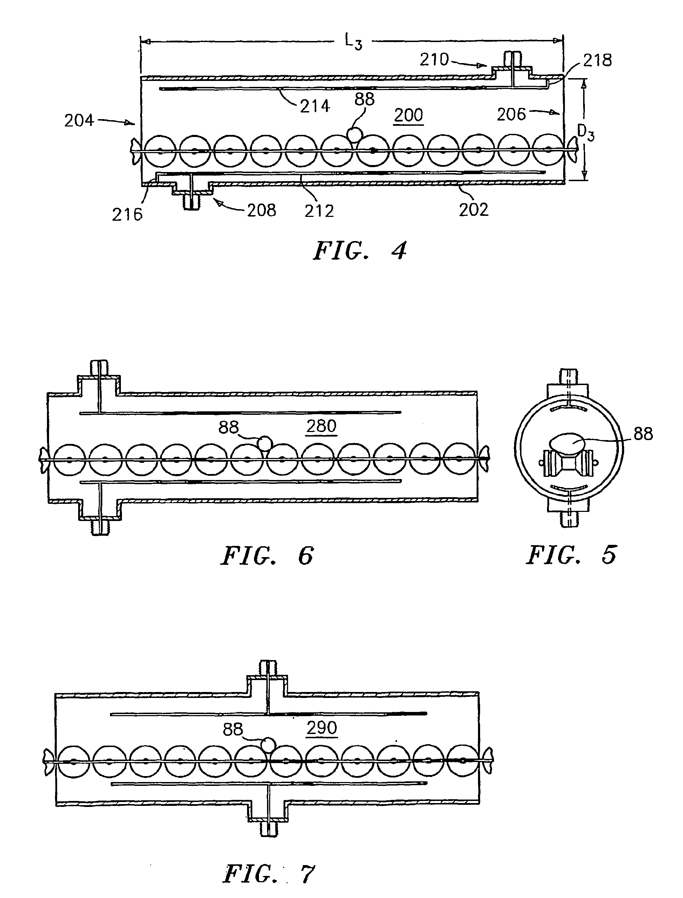

Figs. 4 and 5 show a cavity 200 formed generally as a right circular cylinder of length L₃ and diameter D₃. Exemplary L₃>D₃, The cavity is surrounded by an outer tubular electrode 202 surrounding inlet and outlet ports 204 and 206 at either longitudinal end. The electrode 202 includes a pair of feed ports 208 and 210 provided with coaxial fittings with the outer fitting conductor electrically connected to the electrode 202. The inner conductor of each fitting is connected to an associated inner electrode 212 and 214, respectively. The inner electrodes are longitudinally elongate, extending nearly the entire length of the cavity from their associated feed ports at opposite ends of the cavity. The exemplary inner electrodes each form an arcuate segment in transverse section, concentric with the outer electrode. A foot 216, 218 of the electrodes establishes an electrical connection with the tube. A dielectric inner conduit (not shown) within the inner electrodes and surrounding the conveyor and flowpath may protect the waveguide.

The cavity 200 may be coupled to driving equipment similar to that shown in Fig. 3 for the cavity 62. However, the driving equipment is advantageously a magnetic drive which sets up a 3λ/4 resonance on each electrode, driven in phase. The cavity 200 is preferably oscillated to principally establish a simple dipole field, namely a transverse electric (TE) mode (e.g., the TE₁₀₁ mode) near the center of the cavity so as to principally excite the TE₁₀₁-like mode of the eggs. It is believed that such transverse electric oscillation of the egg at controlled frequency and intensity principally heats the albumen when the egg is near the center of the cavity 200. Near the ends of the cavity, the yolk is believed to be principally heated. Accordingly, an even speed passage through the cavity may heat both yolk and albumen somewhat similarly. An uneven passage speed with a slowing or pause in/near the center may more preferentially heat the albumen. The shorting provided by the feet 216 and 218 of the inner electrodes establishes an electric field between those two inner electrodes and, thereby, is believed to stimulate a transverse magnetic mode. Exemplary oscillation frequencies are similar to those described above. Advantageously, the combination of principal thermal treatment steps is sufficient to achieve at least a target five log bacteria kill in both the yolk and albumen. The frequencies and power of both cavities may be adjusted on the fly to achieve the desired preferential heat distribution. Additional parameters which may be controlled include the buffering time and temperature between the two stages and after the second stage. For example, after the yolk heating, heat diffusion outward through the albumen will be influenced by the external temperature which may be subject to control to achieve a desired result. Such temperature control may involve heating or cooling. For example, the microwave cavity or cavities may lack sufficient power to provide the desired level of heating so supplemental conductive heating may be particularly likely. Fig. 6 shows an alternate cavity 280 wherein the two feed ports is located proximate the same end of the cavity. Fig. 7 similarly shows an alternate cavity 290 wherein the feed ports are both centrally located. The cavities 280 and 290 may, however, be driven with electric drives setting up a λ resonance (one full wavelength) on each of the inner electrodes driven at 180° with respect to each other. Such driving may principally stimulate TM modes near the ends and center of the cavity and TE modes at locations intermediate the center and ends. Generically, the cavities 200, 280, and 290 may be characterized as shielded pair or coaxial cavities.

The general parameters of operation of such a sequential yolk and albumen heating operation, may involve initially heating the yolk to peak temperatures above peak temperatures to which the albumen is subsequently heated. During the albumen heating stage, the yolk may increase in temperature. Advantageously, peak spatial averaged albumen temperatures are just below 56.7°C (134°F) more preferably below 55.5° or 54.4°C (132° or 130°F) to avoid coagulation but above a minimum temperature such as 48.9° or 51.7°C 120° or 125°F. Peak spatial averaged yolk temperatures above 60° or 62.8°C (140° or 145°F) are acceptable (e.g., 62.8°-65.5°C : 145°-150°F).

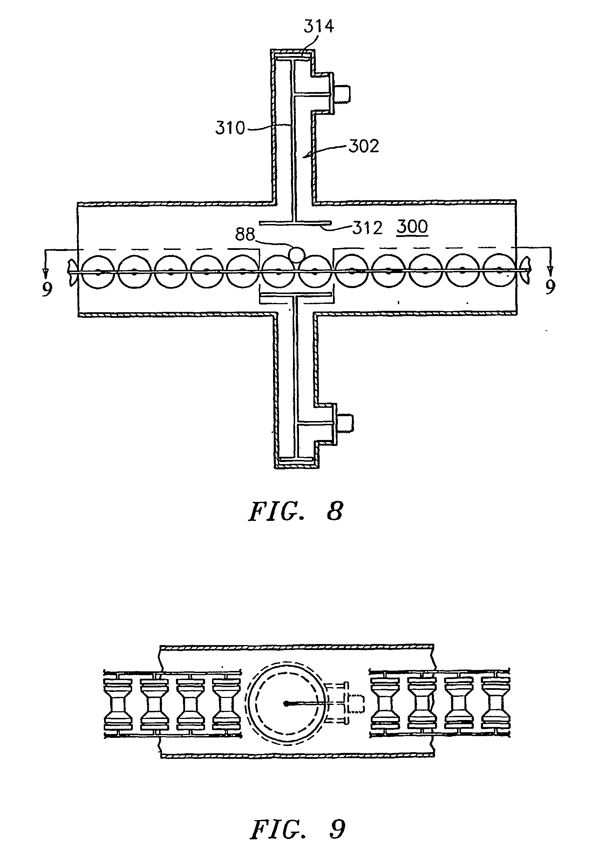

Figs. 8 and 9 show an alternate cavity system having two cavities 300 and 302 intersecting at a right angle. A first cavity 300 along the flow path longitudinally passes the eggs and their conveyor. The second cavity 302 has, at either end away from the cavity 300, a coaxial feed port fitting. The central conductor of each feed port fitting is coupled to an associated electrode having a portion 310 extending within the associated half of the second cavity 302 and protruding into the first cavity 300 to terminate at a first circular end plate 312. At the associated extreme outboard end of the cavity, the electrode terminates in a smaller second end plate 314, which constitutes a sliding short for fine-tuning the cavity. The second cavity diameter is smaller than the first and both may have length substantially greater than their diameter. In this exemplary system, first cavity 300 along the flowpath may be short in length relative to either the cavity 62 and its inlet/outlet waveguides or the cavity 200. This compact cavity may, potentially, be used to excite either the TM or TE modes by driving either at 180° or 0° with respect to one another, respectively.

As noted above, the microwave yolk heating stage may be followed by a more general heating stage such as a conductive thermal heating (e.g., via a hot air oven) as the second principal thermal treatment. Such dry conductive heating may avoid problems of wet heating such as process water contamination and cross-contamination of eggs and post-process mold developed. Such dry conductive heating may have advantages over ionizing radiation treatment (e.g., capital cost savings, danger to personnel, and the like). The dry oven may advantageously be configured as a spiral to provide the desired residence time along the section of conveyor within the oven. In similar fashion, alternatively an albumen-cooling stage may precede the yolk-heating stage. The cooling may advantageously be cryogenic in nature by using liquified gas (e.g., liquid nitrogen). Such cooling advantageously is sufficient to substantially decrease the albumen temperature while leaving the yolk temperature essentially unchanged. The cryogenic cooling itself may effect a substantial bacteria kill in the order of approximately two log or slightly greater. Subsequent preferential heating of the yolk may achieve the desired five log kill in the yolk and the diffusive heating of the albumen thereafter may bring the total bacteria kill in the albumen to the five log target. Advantageously, the final thermal stage before packing brings the eggs to a desired transport/storage temperature (e.g., 7.2°C : 45°F). Thus, for example, if the first post-processing stage 40 involves a dry oven, a second post-processing stage 42 could involve a spiral chiller that brings the temperature throughout, the egg suitably down to the storage/transport temperature.

The system may be configured to meet the needs of an existing egg processing facility and may be configured to use various existing or developed component hardware.

## Claims

1. An apparatus for the in-shell pasteurization of eggs, comprising :
- an egg flow-path comprising two stations of thermal treatment (30, 32);
- a conveyor system (26) conveying in-shell eggs along the egg flow-path; and
- as one of said stations, first means (60) comprising a first essentially right circular cylindrical microwave cavity (62);
**characterized in that** it further comprises means (90, 92-100) for principally exciting a transverse magnetic (TM)-like mode of the eggs within said first cavity (62).

2. The apparatus of claim 1, **characterized in that** said TM-like mode is a TM₁₀₁-like mode.

3. The apparatus of any of the preceding claims, **characterized in that** it comprises, as the other of said stations, second means comprising a second microwave cavity (200, 280, 290), and means for principally exciting a transverse electric (TE) like mode of the eggs within said second cavity (200, 280, 290).

4. The apparatus of claim 3, **characterized in that** said TE-like mode is a TE₁₀₁-like mode.

5. The apparatus of any of the preceding claims, **characterized in that** said first cavity (62) is positioned longitudinally along the egg flow-path, **in that** said first cavity has first and second endwalls (64, 66) with respective first and second central apertures, and **in that** inlet and outlet waveguides (72, 74) cutting off an oscillation frequency of the first cavity are positioned along the egg flow-path to pass the eggs respectively into and out of the first cavity (62) through said first and second apertures.

6. The apparatus of any of the preceding claims, **characterized in that** said first cavity (62) is positioned longitudinally along the egg flow-path and has a length (L1) and a diameter (D1), the length (L1) being less than the diameter (D1).

7. The apparatus of any of the preceding claims combined with claim 3, **characterized in that** said second cavity (200, 280, 290) is a shielded pair cavity.

8. The apparatus of any of claims 1 to 2, further **characterized in that** comprises at least, as the other of said stations (30, 32), one of : a cryogenic chiller positioned along the egg flow-path; and a thermal conduction heater positioned along the egg flow-path.

## Patentansprüche

1. Gerät zur Pasteurisierung von Eiern in der Schale, welches umfasst:
- einen Eier-Laufweg, der zwei Stationen mit Wärmebehandlung (30, 32) umfasst;
- ein Fördersystem (26), das Eier in der Schale entlang des Eier-Laufweges fördert; und
- als eine der Stationen, erste Mittel (60), die einen im wesentlichen aufrechten, kreisförmig-zylindrischen Mikrowellen-Hohlraum (62) umfassen;
**dadurch gekennzeichnet, dass** es weiter Mittel (90, 92-100) zum hauptsächlichen Anregen eines quermagnetisch(TM)-ähnlichen Modus der Eier innerhalb des ersten Hohlraumes (62) umfasst.

2. Gerät nach Anspruch 1, **dadurch gekennzeichnet, dass** der TM-ähnliche Modus ein TM₁₀₁-ähnlicher Modus ist.

3. Gerät nach einem der vorangehenden Ansprüche, **dadurch gekennzeichnet, dass** es, als die andere der Stationen, zweite Mittel umfasst, die einen zweiten Mikrowellen-Hohlraum (200, 280, 290) und Mittel zur hauptsächlichen Anregung eines querelektrisch(TE)-ähnlichen Modus der Eier innerhalb des zweiten Hohlraumes (200, 280, 290) umfassen.

4. Gerät nach Anspruch 3, **dadurch gekennzeichnet, dass** der TE-ähnliche Modus ein TE₁₀₁-ähnlicher Modus ist.

5. Gerät nach einem der vorangehenden Ansprüche, **dadurch gekennzeichnet, dass** der erste Hohlraum (62) in Längsrichtung entlang des Eier-Laufweges angeordnet ist, dass der erste Hohlraum erste und zweite Endwände (64, 66) mit entsprechenden ersten und zweiten mittigen Öffnungen aufweist und dass Einlaß- und Auslaß-Wellenleiter (72, 74), die eine Schwingungsfrequenz des ersten Hohlraumes abschneiden, entlang des Eier-Laufweges angeordnet sind, um die Eier jeweils in und aus dem ersten Hohlraum (62) durch die ersten und zweiten Öffnungen hindurchzuführen.

6. Gerät nach einem der vorangehenden Ansprüche, **dadurch gekennzeichnet, dass** der erste Hohlraum (62) in Längsrichtung entlang des Eier-Laufweges angeordnet ist und eine Länge (L1) und einen Durchmesser (D1) aufweist, wobei die Länge (L1) geringer als der Durchmesser (D1) ist.

7. Gerät nach einem der vorangehenden Ansprüche, kombiniert mit Anspruch 3, **dadurch gekennzeichnet, dass** der zweite Hohlraum (200, 280, 290) ein abgeschirmter symmetrischer Hohlraum ist.

8. Gerät nach einem der Ansprüche 1 bis 2, weiter **dadurch gekennzeichnet, dass** es wenigstens, als die andere der Stationen (30, 32), eines von: einer kryogenen Abkühlvorrichtung, die entlang des Eier-Laufweges angeordnet ist; und einer Wärmeleitungsheizeinrichtung, die entlang des Eier-Laufweges angeordnet ist, umfasst.

## Revendications

1. Dispositif pour la pasteurisation d'oeufs dans leur coquille, comprenant :
- un circuit pour les oeufs comprenant deux postes de traitement thermique (30, 32) ;
- un système de convoyeur (26) acheminant des oeufs dans leur coquille le long du circuit pour les oeufs ; et
- dans un desdits postes, des premiers moyens (60) comprenant une première cavité de micro-onde sensiblement cylindrique, circulaire et droite (62) ;
**caractérisé en ce qu'**il comprend en outre des moyens (90, 92-100) pour exciter principalement un mode similaire à un mode magnétique transversal (TM) des oeufs dans ladite première cavité (62).

2. Dispositif selon la revendication 1, **caractérisé en ce que** ledit mode similaire à un mode TM est un mode similaire à un mode TM₋₁₀₁.

3. Dispositif selon l'une quelconque des revendications précédentes, **caractérisé en ce qu'**il comprend, dans l'autre desdits postes, des seconds moyens comprenant une seconde cavité de micro-onde (200, 280, 290) et des moyens pour exciter principalement un mode similaire à un mode électrique transversal (TE) des oeufs dans ladite seconde cavité (200, 280, 290).

4. Dispositif selon la revendication 3, **caractérisé en ce que** ledit mode similaire au mode TE est un mode similaire à un mode TM₋₁₀₁.

5. Dispositif selon l'une quelconque des revendications précédentes, **caractérisé en ce que** ladite première cavité (62) est positionnée longitudinalement le long du circuit pour les oeufs, **en ce que** ladite première cavité a des première et seconde parois d'extrémités (64, 66) avec des première et seconde ouvertures centrales respectives et **en ce que** des guides d'ondes d'entrée et de sortie (72, 74) coupant une fréquence d'oscillation de la première cavité sont positionnés le long du circuit pour les oeufs pour transférer respectivement les oeufs dans et hors de la première cavité (62) à travers lesdites première et seconde ouvertures.

6. Dispositif selon l'une quelconque des revendications précédentes, **caractérisé en ce que** ladite première cavité (62) est positionnée longitudinalement le long du circuit pour les oeufs et a une longueur (L1) et un diamètre (D1), la longueur (L1) étant inférieure au diamètre (D1).

7. Dispositif selon l'une quelconque des revendications en combinaison avec la revendication 3, **caractérisé en ce que** ladite seconde cavité (200, 280, 290) est une cavité à paire blindée.

8. dispositif selon l'une quelconque des revendications 1 à 2, **caractérisé en outre en ce qu'**il comprend au moins, dans l'autre desdits postes (30, 32), un élément parmi : un refroidisseur cryogénique positionné le long du circuit pour les oeufs ; un réchauffeur à conduction thermique positionné le long du circuit pour les oeufs.
